# EUROPEAN PATENT APPLICATION

(11) **EP 4 362 186 A1**
(43) Date of publication of application: **01.05.2024**
(21) Application number: 23178275.6
(22) Date of filing: 08.06.2023
(51) Int. Cl.: H01M 50/204, H01M 50/213, H01M 50/264, H01M 50/367, H01M 50/383

(54) **BATTERY ASSEMBLIES**

(30) Priority: 24.10.2022 CN 202211299326
(71) Applicant: Eve Energy Co. Ltd., Huizhou, Guangdong 516000 (CN); Eve Power Co., Ltd., Jingmen, Hubei 448000 (CN)
(72) Inventor: WEI, Xueqing, Huizhou, Guangdong, 516000 (CN); LIANG, Xianyu, Huizhou, Guangdong, 516000 (CN)
(74) Representative: Murgitroyd & Company

(57) **Abstract**

A battery assembly includes a battery box and a cell module (30) disposed inside the battery box. The battery box includes a bottom plate (10) having a bottom cavity (110) inside, and a top surface of the bottom plate (10) is provided with intercommunicating holes (1111) communicating with the bottom cavity (110). An outer wall of the battery box is provided with at least one valve installation hole (01) communicating with the bottom cavity (110) and configured to install a pressure relief valve (40). The cell module (30) includes a top bracket (32) and a cell assembly including a plurality of cells (31) each having an explosion-proof valve directly opposite to the intercommunicating hole (1111). The top bracket (32) is disposed at a top of the cell assembly, and the top bracket (32) is connected with the battery box, so as to press the cell assembly against the battery box.

## Description

### TECHNICAL FIELD

The present disclosure relates to the technical field of batteries, and in particular, to battery assemblies.

### BACKGROUND

In related art, a battery assembly generally includes a battery box and a cell module arranged in the battery box, and a tray and a bottom of the battery box are generally arranged at intervals to define a pressure relief channel in the battery assembly, which is configured to discharge the ejecta and high-temperature gas emitted when a cell is thermally out of control. However, the battery box is required to be equipped with a structure supporting the tray to separate a bottom of the tray from the bottom of the battery box, which increases a number of components, resulting in a complex structure and high costs of the battery assembly.

### SUMMARY

In view of the above, a battery assembly according to an embodiment of the present disclosure is provided. The battery assembly includes:
a battery box including a bottom plate provided with a bottom cavity inside, herein, a plurality of intercommunicating holes communicating with the bottom cavity are provided on a top surface of the bottom plate, one or more valve installation holes communicating with the bottom cavity are provided on an outer wall of the battery box, and each of the valve installation holes is engaged with a pressure relief valve; and
a cell module disposed inside the battery box, herein, the cell module includes a top bracket and a cell assembly including a plurality of cells, each of the cells including an explosion-proof valve directly opposite to one of the intercommunicating holes, the top bracket is disposed at a top portion of the cell assembly and connected with the battery box to press the cell assembly against the battery box.

### BRIEF DESCRIPTION OF THE DRAWINGS

FIG. 1 is a schematic view of a structure when a cell module is arranged in a battery box according to an embodiment of the present disclosure.
FIG. 2 is a schematic view of another structure when a cell module is arranged in a battery box according to an embodiment of the present disclosure.
FIG. 3 is a cross-sectional view of a battery box according to an embodiment of the present disclosure.
FIG. 4 a cross-sectional view of an assembly of a bottom plate and a front plate according to an embodiment of the present disclosure.
FIG. 5 is a top view of a battery box according to an embodiment of the present disclosure.
FIG. 6 is a cross-sectional view of a structure in FIG. 5 along a line B-B.
FIG. 7 is a cross-sectional view of a structure when a bottom bracket is arranged in a battery box according to an embodiment of the present disclosure.
FIG. 8 is a cross-sectional view of another structure when a bottom bracket is arranged in a battery box according to an embodiment of the present disclosure.
FIG. 9 is an enlarged view of a part A in FIG. 8.

### List of reference numerals in the drawings:

10, bottom plate; 11, first bottom plate; 110, bottom cavity; 111, upper plate; 1111, intercommunicating hole; 1112, guide surface; 112, lower plate; 113, reinforcing rib; 12, intermediate partition beam; 13, second bottom plate; 20, side plate; 210, socket; 21, front plate; 211, side cavity; 212, grid plate; 2121, plate body; 2122, grid hole; 22, lateral plate; 221, support surface; 23, rear panel; 30, cell module; 31, cell; 32, top bracket; 320, avoidance hole 320; 321, bracket top plate; 322, bracket side plate; 323, bracket flap; 33, bottom bracket; 331, through hole; 332, positioning sleeve; 40, pressure relief valve; 50 structural adhesive layer; valve installation hole 01.

### DETAILED DESCRIPTION

The present disclosure is further detailed below with reference to the accompanying drawings and examples. It will be appreciated that the specific embodiments described herein are merely illustrative of the invention and are not limited thereto. It will also be noted that, only the parts associated with the present invention are shown in the drawings rather than all structures facilitate description.

in description of the present disclosure, unless otherwise specified and defined, terms "connected with", "connected" and "fixed" should be understood in a broad sense, for example, it may be a fixed connection, a detachable connection, or a whole; it may be a mechanical connection or an electrical connection; it may be a directly connection or an indirectly connection through an intermediate media; and it may be an internal communication of two components or an interaction relationship between two components. For those skilled in the art, meanings of the above terms in the present disclosure can be understood according to situations.

in the present disclosure, unless otherwise specified and defined, a first feature is disposed "on" or "under" a second feature may include a direct contact between the first feature and the second feature, or a contact between the first feature and the second feature through other features rather than the direct contact. Moreover, that the first feature is disposed "up", "above", and "on" the second feature includes that the first feature is right above or obliquely above the second feature, or only indicate that a horizontal height of the first feature is greater than a horizontal height of the second feature. That the first feature is disposed "under", "below", or "underneath" of the second feature include that the first feature is right below or obliquely below the second feature, or only indicate that the horizontal height of the first feature is less than the horizontal height of the second feature.

in the description of this embodiment, terms indicating orientation or location relationships such as "up", "down", "left", and "right" are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present application. In addition, terms "first" and "second" are only used to distinguish in terms of description and have no special meanings.

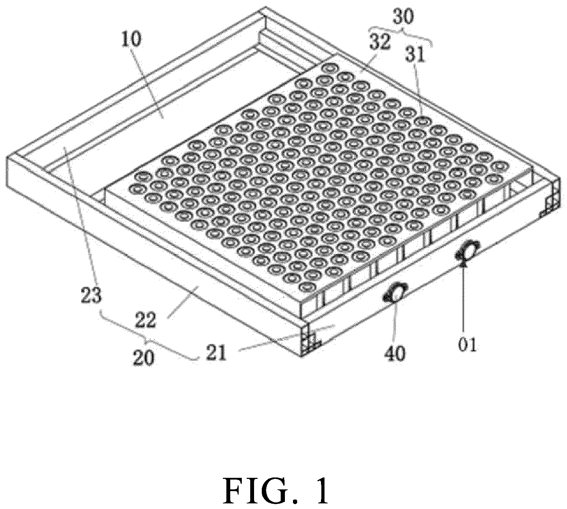

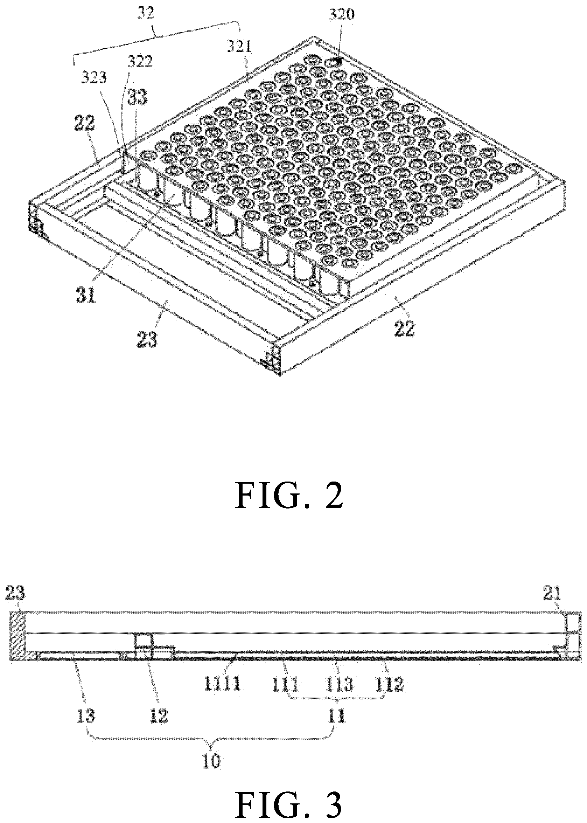

As shown in FIG. 1 and FIG. 2, a battery assembly is provided according to an embodiment. The battery assembly includes a battery box and a cell module 30 arranged in the battery box. The cell module 30 includes a cell assembly and a top bracket 32. The cell assembly includes a plurality of cells 31, and each of the cells 31 is provided with an explosion-proof valve. The explosion-proof valve can be opened when the cells 31 are thermally out of control, so as to prevent the cells 31 from exploding. The top bracket 32 is disposed at a top portion of the cell assembly, and the top bracket 32 is fixedly connected with the battery box, so as to press the cell assembly against and inside the battery box, thereby realizing fixing of the cell assembly. In the embodiment, the cell assembly is fixed by pressed in the battery box through the top bracket 32, which makes a fixing mode of the cell assembly simple and easy to operate, and is conducive to improving a modularization degree of the cell assembly, thereby facilitating an assemble of the battery assembly.

Furthermore, the cell module 30 may further include a bottom bracket 33, and the bottom bracket 33 is disposed at a bottom position of the cell assembly to carry the cell assembly. The bottom bracket 33 and the top bracket 32 are both fixedly connected with the battery box to clamp and fix the cell assembly.

in order to discharge the airflow and ejecta from the battery box when the cell 31 is thermally out of control, the battery box includes a bottom plate 10, and a bottom cavity 110 is defined inside the bottom plate 10, and a top surface of the bottom plate 10 is provided with a plurality of intercommunicating holes 1111 communicating with the bottom cavity 110. When the cell 31 is disposed inside the battery box, the explosion-proof valve of the cell 31 is configured to be directly opposite to and communicates with one of the intercommunicating holes 1111. One or more valve installation holes 01 communicating with the bottom cavity 110 are further provided on an outer wall of the battery box, and each of the valve installation holes 01 is engaged with a pressure relief valve 40.

in the embodiment, the bottom cavity 110 is defined by designing the bottom plate 10 as a hollow structure, which can reduce the number of components of the battery assembly and reduce the costs while meeting the pressure relief requirements.

in the embodiment, the bottom plate 10 and the bottom bracket 33 are two independent components. In some embodiments, the bottom plate 10 may be formed by the bottom bracket 33, that is the bottom plate 10 and the bottom bracket 33 integrated as a same structural component, which is beneficial to further reduce the number of components and the costs.

Furthermore, the bottom bracket 33 is disposed on the bottom plate 10, and the bottom bracket 33 is provided with a plurality of through holes 331, which communicate with the intercommunicating holes 1111 of the bottom plate 10 in one-to-one correspondence, so that ejected fluid can enter the bottom cavity 110 through the through holes 331 and the intercommunicating holes 1111 when the cell 31 is thermally out of control.

Furthermore, top bracket 32 is provided with a plurality of avoidance holes 320, which are arranged in one-to-one correspondence with the cells 31. An electrode on a top of the cell 31 can extend into the avoidance hole 320 to facilitate connection with a busbar.

in the embodiment, a top end and a bottom of the cell 31 are bonded and fixed on the top bracket 32 and the bottom bracket 33 respectively by structural glue, so as to further improve fixing effect of the cell 31. A structural adhesive layer 50 is disposed between the bottom bracket 33 and the bottom plate 10, so that the bottom bracket 33 is fixed on the bottom plate 10 through the structural adhesive layer 50. Furthermore, the bottom bracket 33 and the top bracket 32 are both further fixed on the battery box by screws. Herein, the bottom bracket 33 is fastened on the bottom plate 10 by screws.

in order to facilitate fixing of the top bracket 32 to the battery box, the top bracket 32 is substantially U-shaped and includes a bracket top plate 321, two opposite bracket side plates 322, and two bracket flaps 323. The bracket side plate 322 has a top end connected with the bracket top plate 321 and a bottom connected with the bracket flap. When assembly, a top of the bracket top plate 321 is bonded to a top of the cell assembly by structural glue. The bracket side plate 322 extends from top to bottom to protect a side of a side of the cell assembly, and the bracket flap 323 is fixedly connected with the battery box by screws.

As shown in FIG. 1, FIG. 2, and FIG. 4, the battery box further includes a side plate 20 connected to a periphery of the bottom plate 10 and arranged around the bottom plate 10. A side cavity 211 communicating with the bottom cavity 110 is provided inside the side plate 20, and the valve installation hole 01 communicates with the side cavity 211. A grid plate 212 is arranged in the side cavity 211 and located between the pressure relief valve 40 and the bottom cavity 110.

in the embodiment, during a discharging process of the ejected fluid when the cell 31 is thermally out of control, the ejected fluid will firstly pass through the grid plate 212 and then be discharged by the pressure relief valve 40. On the one hand, the grid plate 212 can improve strength of the side plate 20, and on the other hand, the grid plate 212 can slow down and hinder flames carried in the fluid, thereby preventing the flames from directly contacting pressure relief valve 40, which is beneficial to improving a service life of the pressure relief valve 40, and can also avoid potential safety hazards caused by the flames spraying out of the battery box through the pressure relief valve 40.

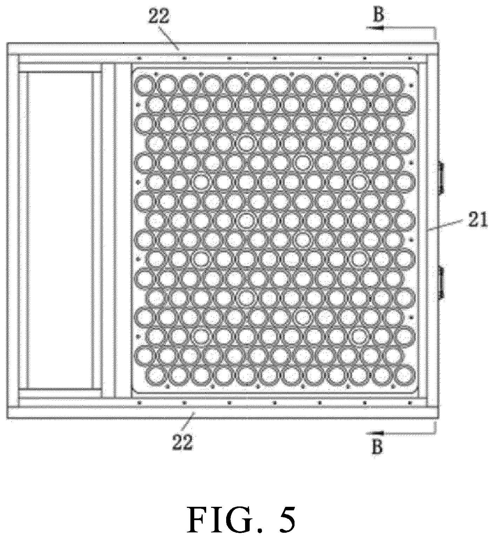

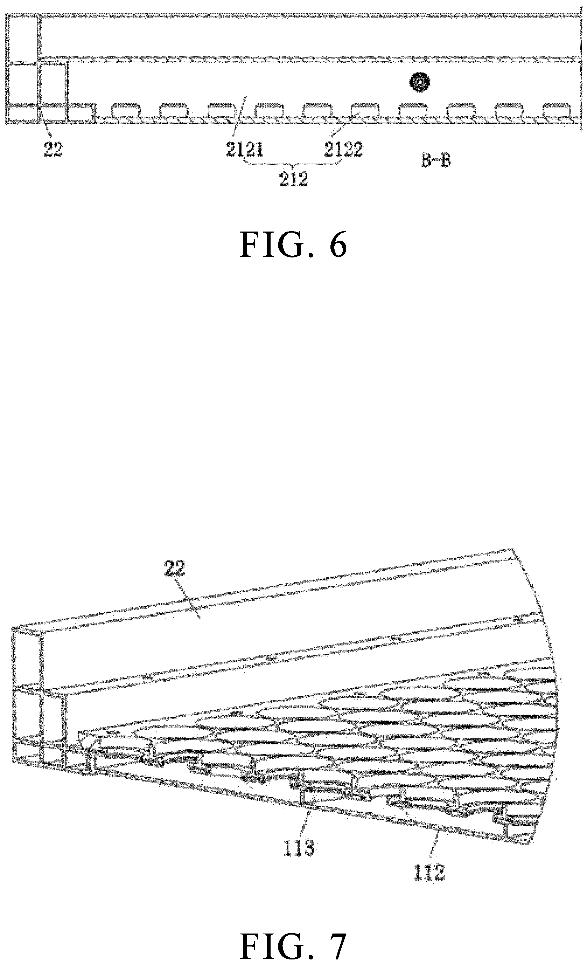

Specifically, as shown in FIG. 5 and FIG. 6, the grid plate 212 includes a plate body 2121 vertically arranged inside the side cavity 211, and the plate body 2121 is provided with a plurality of grid holes 2122. The airflow can pass through the grid holes 2122, and a solid portion of the plate body 2121 can block the flames and prevent the flames from directly contacting pressure relief valve 40.

Furthermore, the plurality of grid holes 2122 are defined on a bottom end of the plate body 2121 to facilitate smooth passage of the airflow and also help to block the flame.

Specifically, the bottom plate 10 is substantially rectangular, the side plate 20 includes four plates, and each side edge of the bottom plate 10 is connected with one of the four plates. In order to facilitate description, the four plates are respectively a front plate 21, a rear panel 23 and two lateral plate 22 (referring to a left plate and a right plate). The pressure relief valve 40 and the side cavity 211 are both arranged on the front plate 21.

in the embodiment, an inner side of the front plate 21 is provided with a socket 210 communicating with the side cavity 211, a front end of the bottom plate 10 is inserted into the socket 210 to realize fixing with the front plate 21, and the bottom cavity 110 communicates with side cavity 211.

Optionally, the front plate 21 and the front end of the bottom plate 10 may be fixed by welding or glued.

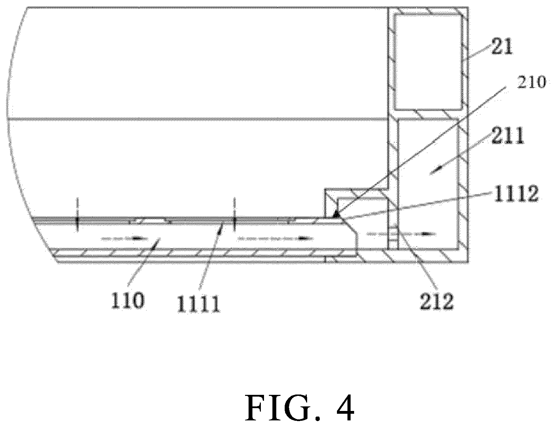

in order to facilitate the airflow, the ejecta, and the flames in the bottom cavity 110 to enter the side cavity 211 and spread, as shown in FIG. 4, an end of the bottom plate 10 protruding into the socket 210 is provided with a chamfer to form a guide surface 1112, and the guide surface 1112 is oblique from top to bottom to an inside of the side cavity 211. A space inside the side cavity 211 can be increased arranging the chamfer, so that the gas, the ejecta, and the flames can fully spread to all places inside the side cavity 211 to be discharged after passing through the grid plate 212.

Optionally, a plurality of ribs are arranged inside the front plate 21 to improve strength of the front plate 21.

Furthermore, the bottom plate 10 includes a first bottom plate 11, an intermediate partition beam 12, and a second bottom plate 13 connected in sequence. The bottom cavity 110 is defined inside the first bottom plate 11 and penetrates the first bottom plate 11 along a first direction. An end of the first bottom plate 11 along the first direction is connected with the front plate 21, and another end of the first bottom plate 11 along the first direction is connected with the intermediate partition beam 12. Herein, the first direction is a front-back direction.

in the embodiment, the bottom cavity 110 runs through the first bottom plate 11 along the first direction, which can facilitate processing the first bottom plate 11. The first bottom plate 11 may be formed into an integrated structure by extrusion, stamping, or die-casting technology, which is conducive to improving strength and reducing processing costs. The end of the first bottom plate 11 connected with the intermediate partition beam 12 can block an opening on a side of the bottom cavity 110, so that the fluid and flames entering the bottom cavity 110 flow toward the side cavity 211 in a specified direction, so as to realize directional pressure relief.

Furthermore, as shown in FIG. 3 and FIG. 7, the first bottom plate 11 includes an upper plate 111, a lower plate 112, and reinforcing ribs 113 each disposed between the lower plate 112 and the upper plate 111. The intercommunicating holes 1111 are defined on the upper plate 111. The reinforcing rib 113 extends along the first direction. Because the cell 31 is installed on the upper plate 111, and the upper plate 111 is a hole-defined plate having a relatively weak strength, the reinforcing ribs 113 not only improve the strength of the first bottom plate 11, but also are beneficial to increase resistance of the battery assembly to impact of external rubbles.

Optionally, a number of the reinforcing ribs 113 and a size of the reinforcing rib may be adjusted according to simulation or test conditions.

Optionally, the second bottom plate 13 is a hollow structure. The second bottom plate 13 may be configured to place other components of the battery assembly, such as a battery management system and a battery thermal management system. The second bottom plate 13 is designed as the hollow structure, so that the air in the second bottom plate 13 can play a role of heat insulation, thereby preventing heat generated by the battery assembly from affecting operation and safety of external devices. A cooling medium may also be injected into the second bottom plate 13 to dissipate heat for structures above the second bottom plate 13.

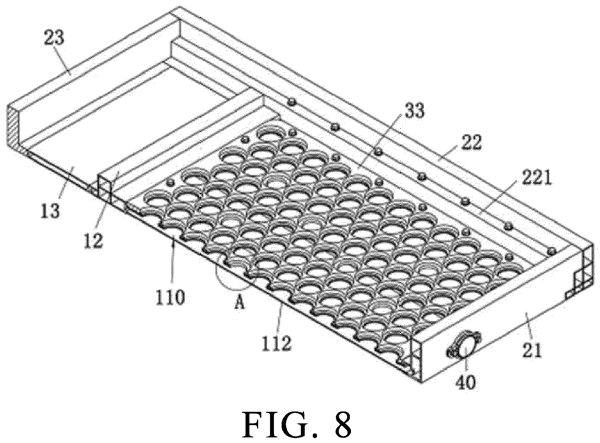

In order to facilitate fixing the bracket flap 323 to the battery box, as shown in FIG. 8, inner walls of the two lateral plates 22 of the battery box are each provided with a horizontally extending support surface 221, and the bracket flap 323 abuts against the support surface 221 and are fixed by screws.

in the embodiment, bottom bracket 33 is a flat plate structure, so that the bottom bracket 33 is stably placed on the bottom plate 10 of the battery box.

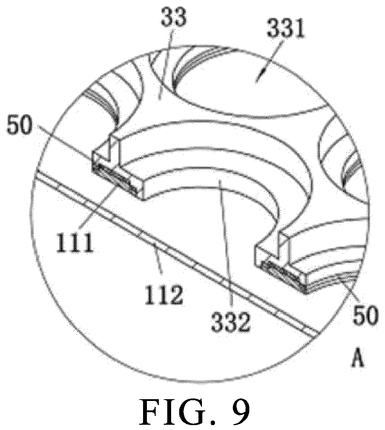

in order to prevent the bottom bracket 33 from moving on the bottom plate 10, as shown in FIG. 8 and FIG. 9, one or more positioning sleeves 332 each extending downward and around an edge of the through hole 331 are provided on the bottom bracket 33, and the positioning sleeve 332 protrudes into a corresponding intercommunicating hole 1111. The positioning sleeve 332 and intercommunicating hole 1111 are coupled with each other to realize positioning of the bottom bracket 33 and the bottom plate 10, so that misalignment of the bottom bracket 33 on the bottom plate 10 can be avoid, which is beneficial to improve positioning accuracy of the bottom bracket 33 and the bottom plate 10.

Furthermore, at least two through holes 331 of the bottom bracket 33 are each correspondingly provided with the positioning sleeve 332 to limit deflection of the bottom bracket 33 on the bottom plate 10, which is beneficial to improve fixing effect between the bottom bracket 33 and the bottom plate 10.

in the battery assembly provided by the present disclosure, the bottom plate 10 directly defines the bottom cavity 110 for pressure relief, which is beneficial to simplify the structure of the battery assembly, reduce a number of components, and reduce the costs. the cell assembly is pressed against and inside the battery box through the top bracket 32, which makes a fixing mode of the cell assembly simple and easy to operate, and makes fixing effect of the cell assembly better.

Obviously, the above embodiments of the present disclosure are only intended to clearly illustrate the examples of the present invention, and are not a limitation of embodiments of the present disclosure. Those skilled in the art can make various changes, modifications, and substitutions without departing from the scope of the present disclosure. There is no need and cannot exhaust all implementations. Any modifications, equivalent substitutions, and improvements made within the spirit and principles of the present disclosure shall be covered by the scope of the claims in the present disclosure.

## Claims

1. A battery assembly, **characterized in that**, the battery assembly comprises:
a battery box comprising a bottom plate (10) provided with a bottom cavity (110) inside, wherein a plurality of intercommunicating holes (1111) communicating with the bottom cavity (110) are provided on a top surface of the bottom plate (10), one or more valve installation holes (01) communicating with the bottom cavity (110) are provided on an outer wall of the battery box, and each of the valve installation holes (01) is engaged with a pressure relief valve (40); and
a cell module (30) disposed inside the battery box, and comprising:
a cell assembly comprising a plurality of cells (31), each of the cells (31) comprising an explosion-proof valve directly opposite to one of the intercommunicating holes (1111); and
a top bracket (32), disposed at a top portion of the cell assembly and connected with the battery box to press the cell assembly against the battery box.

2. The battery assembly according to claim 1, **characterized in that**, the top bracket (32) is provided with a plurality of avoidance holes (320) arranged in one-to-one correspondence with the cells (31), and an electrode at a top portion of each of the cells (31) extends into one of the avoidance holes (320).

3. The battery assembly according to claim 2, **characterized in that**, the top bracket (32) comprises:
a bracket top plate (321) disposed on a top surface of the cell assembly, wherein the avoidance holes (320) are defined on the bracket top plate (321);
two opposite bracket side plates (322), wherein two opposite sides of the bracket top plate (321) are each connected with one of the bracket side plates (322), and each of the bracket side plates (322) is perpendicularly connected with the bracket top plate (321); and
two bracket flaps (323), wherein each of the bracket side plates (322) is connected with one of the bracket flaps (323), each of the bracket flaps (323) is perpendicularly connected with one of the bracket side plates (322), and the bracket flaps (323) are configured to fix with the battery box.

4. The battery assembly according to claim 3, **characterized in that**, inner walls of the battery box are each provided with a horizontally extending support surface (221), each of the bracket flaps (323) is fixed on the support surface (221).

5. The battery assembly according to any one of claim 1 to claim 4, **characterized in that**, the cell module (30) further comprises a bottom bracket (33) configured to carry the cell assembly, the bottom bracket (33) is disposed on the bottom plate (10), and the top bracket (32) and the bottom bracket (33) are coupled with each other to clamp the cell assembly.

6. The battery assembly according to claim 5, **characterized in that**, the bottom plate (10) is formed by the bottom bracket (33).

7. The battery assembly according to claim 5, **characterized in that**, each of the cells (31) is fixed on at least one of the bottom bracket (33) and the top bracket (32) by structural glue.

8. The battery assembly according to claim 5, **characterized in that**, the bottom bracket (33) is provided with a plurality of through holes (331) communicating with the intercommunicating holes (1111) in one-to-one correspondence; one or more positioning sleeves (332) each around an edge of one of the through holes (331) and extending downward are provided on the bottom bracket (33); and each of the positioning sleeves (332) protrudes into a corresponding one of the intercommunicating holes (1111).

9. The battery assembly according to claim 5, **characterized in that**, a structural adhesive layer (50) is arranged between the bottom bracket (33) and the bottom plate (10), and the structural adhesive layer (50) is configured to bond the bottom bracket (33) and the bottom plate (10).

10. The battery assembly according to any one of claim 1 to claim 4, wherein the battery box further comprises a side plate (20) connected with the bottom plate (10); a side cavity (211) communicating with the bottom cavity (110) is provided inside the side plate (20); each of the valve installation holes (01) is defined on the side plate (20) and communicates with the side cavity (211); a grid plate (212) is arranged in the side cavity (211) and located between each of the valve installation holes (01) and the bottom cavity (110).

11. The battery assembly according to claim 10, wherein the grid plate (212) comprises a plate body (2121) provided with a plurality of grid holes (2122).

12. The battery assembly according to any one of claim 1 to claim 4, **characterized in that**, the side plate (20) is provided with a socket (210) communicating with the side cavity (211); an end of the bottom plate (10) is inserted into the socket (210); an end of the bottom plate (10) protruding into the socket (210) is provided with a chamfer to form a guide surface (1112); and the guide surface (1112) is oblique from top to bottom to an inside of the side cavity (211).

13. The battery assembly according to any one of claim 1 to claim 4, **characterized in that**, the bottom plate (10) comprises a first bottom plate (11), an intermediate partition beam (12), and a second bottom plate (13) connected in sequence, the bottom cavity (110) is defined inside the first bottom plate (11), and penetrates the first bottom plate (11) along a first direction; the side cavity (211) is disposed adjacent to an end of the first bottom plate (11) along the first direction, and another end of the first bottom plate (11) along the first direction is connected with the intermediate partition beam (12).

14. The battery assembly according to claim 13, **characterized in that**, the first bottom plate (11) comprises an upper plate (111), a lower plate (112), and reinforcing ribs (113) each disposed between the lower plate (112) and the upper plate (111), and each of the reinforcing ribs (113) extends along the first direction.

15. The battery assembly according to claim 13, **characterized in that**, the second bottom plate (13) is a hollow structure.
